# EUROPÄISCHE PATENTSCHRIFT

(11) **EP 2 998 176 B1**
(45) Veröffentlichungstag und Bekanntmachung des Hinweises auf die Patenterteilung: **01.02.2017**
(21) Anmeldenummer: 15172468.9
(22) Anmeldetag: 17.06.2015
(51) Int. Cl.: B60T 10/02

(54) **DAUERBREMSEINRICHTUNG FÜR EINEN KRAFTFAHRZEUGANTRIEBSSTRANG, SOWIE KRAFTFAHRZEUGANTRIEBSSTRANG**
RETARDER FOR A MOTOR VEHICLE DRIVE TRAIN, AND MOTOR VEHICLE DRIVE TRAIN
DISPOSITIF DE FREIN PERMANENT POUR ENTRAINEMENT D'UN VEHICULE AUTOMOBILE ET ENTRAINEMENT D'UN VEHICULE AUTOMOBILE

(30) Priorität: 17.07.2014 DE 102014213939
(43) Veröffentlichungstag der Anmeldung: 23.03.2016
(73) Patentinhaber: ZF Friedrichshafen AG, 88046 Friedrichshafen (DE)
(72) Erfinder: EHRMINGER, Johannes, 78315 Radolfzell am Bodensee (DE); HEINZELMANN, Karl-Fritz, 88074 Meckenbeuren (DE); RAUTER, Jürgen, 88045 Friedrichshafen (DE); GRAF, Andreas, 78333 Stockach (DE); HOERING, Gerhard, 88709 Hagnau am Bodensee (DE); MILLER, Martin, 88090 Immenstaad am Bodensee (DE); WOELFLE, Bernd, 88074 Meckenbeuren (DE)

(56) Entgegenhaltungen:
- WO-A2-2013/083738
- DE-A1- 19 751 776
- DE-A1-102012 205 823
- DE-C1- 19 650 380

## Beschreibung

Die Erfindung betrifft eine Dauerbremseinrichtung für einen Kraftfahrzeugantriebsstrang, umfassend einen Retarder, dessen Antriebswelle mit einem ersten Schaltelement gekoppelt ist, wobei über dieses erste Schaltelement innerhalb des Kraftfahrzeugantriebsstranges eine Anbindung an eine Abtriebsseite eines Kraftfahrzeuggetriebes herstellbar ist. Des Weiteren betrifft die Erfindung einen Kraftfahrzeugantriebsstrang, bei welchem eine vorgenannte Dauerbremseinrichtung zur Anwendung kommt.

Dauerbremseinrichtungen kommen bei Kraftfahrzeugen insbesondere im Bereich der Nutzfahrzeuge als verschleißfreie Bremsanlagen zur Anwendung. Zum überwiegenden Teil umfasst eine Dauerbremseinrichtung dabei einen hydrodynamischen Retarder, bei welchem die Strömungsenergie einer Flüssigkeit zur Erzeugung eines Bremsmoments genutzt wird. Die Flüssigkeit wird dazu in einen üblicherweise torusförmig gestalteten Arbeitsraum zwischen einem Stator und einem Rotor eingebracht und im Folgenden über eine Beschaufelung des sich drehenden Rotors mitgenommen. Durch die Beschaufelung des Rotors wird die Flüssigkeit dann zu einer Beschaufelung des Stators gefördert, wo sich die Flüssigkeit abstützt und anschließend wiederum zu der Beschaufelung des Rotors zurückgeleitet wird. Dabei wird ein verzögerndes Moment auf den Rotor ausgeübt, wobei eine Größe dieses Bremsmoments über die in den Arbeitsraum eingebrachte Flüssigkeitsmenge gesteuert werden kann. Allerdings tritt insbesondere bei hydrodynamischen Retardern auch im unbefüllten Zustand und abseits eines Bremsbetriebes ein gewisses Bremsmoment auf, welches seine Ursache in einem Umpumpen von Luft und Resten an Flüssigkeit zwischen dem sich drehenden Rotor und dem Stator hat. Um derartige Lüfterverluste nun zu vermeiden, werden hydrodynamische Retarder häufig zuschaltbar ausgeführt, so dass der Rotor des Retarders erst für den Bremsbetrieb in den Kraftfluss des Kraftfahrzeugantriebsstranges eingebunden wird und damit auch erst ab diesem Zeitpunkt ein Bremsmoment einspeist.

Aus der DE 10 2011 120 729 A1 geht eine Dauerbremseinrichtung für einen Kraftfahrzeugantriebsstrang hervor, welche einen hydrodynamischen Retarder aufweist. Eine Antriebswelle dieses Retarders steht mit einem Schaltelement in Form einer Trennkupplung in Verbindung, über welche die Antriebswelle des Retarders mittels einer zwischenliegenden Hochtreiberstufe mit einer Abtriebswelle eines Kraftfahrzeuggetriebes verbunden werden kann. Innerhalb des Kraftfahrzeugantriebsstranges ist der hydrodynamische Retarder in der Folge als ein sogenannter Sekundärretarder vorgesehen, über welchen ein Bremsbetrieb auch bei Gangwechseln im vorgeschalteten Kraftfahrzeuggetriebe realisierbar ist.

Ein weiteres Beispiel des Standes der Technik ist in Dokument wo 2013 083 738 offenbart.

Ausgehend vom vorstehend beschriebenen Stand der Technik ist es nun die Aufgabe der vorliegenden Erfindung, eine Dauerbremseinrichtung für einen Kraftfahrzeugantriebsstrang zu schaffen, mittels welcher ein Betrieb eines Retarders an unterschiedliche Fahrzustände eines Kraftfahrzeuges angepasst werden kann, gleichzeitig aber ein hoher Gesamtwirkungsgrad realisierbar ist.

Diese Aufgabe wird ausgehend vom Oberbegriff des Anspruchs 1 in Verbindung mit dessen kennzeichnenden Merkmalen gelöst. Die hierauf folgenden, abhängigen Ansprüche geben jeweils vorteilhafte Weiterbildungen der Erfindung wieder. Ein Kraftfahrzeugantriebsstrang, bei welchem eine erfindungsgemäße Dauerbremseinrichtung zur Anwendung kommt, geht ferner aus Anspruch 10 hervor.

Gemäß der Erfindung umfasst eine Dauerbremseinrichtung für einen Kraftfahrzeugantriebsstrang einen Retarder, dessen Antriebswelle mit einem ersten Schaltelement gekoppelt ist. Dabei kann über dieses erste Schaltelement innerhalb des Kraftfahrzeugantriebsstranges eine Anbindung der Antriebswelle an eine Abtriebsseite eines Kraftfahrzeuggetriebes hergestellt werden. Im Rahmen der Erfindung handelt es sich bei dem Retarder bevorzugt um einen hydrodynamischen Retarder, welcher sich auf dem Fachmann prinzipiell bekannte Art und Weise aus einem Rotor und einem Stator zusammensetzt. Sowohl der Rotor als auch der Stator sind dabei jeweils mit Beschaufelungen ausgestattet und definieren zwischen sich einen insbesondere torusförmig gestalteten Arbeitsraum, in welchen eine Flüssigkeit, bevorzugt in Form von Öl oder Wasser, für einen Bremsbetrieb eingebracht werden kann. Im Bremsbetrieb wird eine eingebrachte Flüssigkeitsmenge über die Beschaufelung des Rotors mitgenommen und in Richtung der Beschaufelung des Stators gefördert, wo sie sich abstützt und wiederum zurück zum Rotor geleitet wird. Dies wirkt verzögernd auf den Rotor, so dass sich ein von der Flüssigkeitsmenge abhängiges Bremsmoment darstellen lässt. Im Rahmen der Erfindung kann es sich bei dem Retarder aber auch um einen hydrostatischen oder auch einen elektrodynamischen Retarder handeln.

Erfindungsgemäß ist unter einem "Schaltelement" eine Einrichtung zu verstehen, über welche zwei ansonsten relativ zueinander verdrehbare Komponenten in ihren Drehbewegungen miteinander gekoppelt werden können. Dabei kann ein Schaltelement im Sinne der Erfindung prinzipiell als formschlüssiges Schaltelement, wie beispielsweise als Klauenkupplung oder Sperrsynchronisation, oder auch als kraftschlüssiges Schaltelement ausgeführt sein, beispielsweise in Form einer Lamellenkupplung. Insbesondere im Falle einer Ausführung als formschlüssiges Schaltelement kommt zudem entweder eine Ausgestaltung als synchronisiertes oder als unsynchronisiertes Schaltelement in Betracht.

Die Erfindung umfasst nun die technische Lehre, dass die Antriebswelle des Retarders zudem mit mindestens einem weiteren Schaltelement gekoppelt ist, mittels welchem innerhalb des Kraftfahrzeugantriebsstranges je eine Verbindung der Antriebswelle zu einer Abtriebsseite einer dem Kraftfahrzeuggetriebe vorgeschalteten Antriebsmaschine vollzogen werden kann. Mit anderen Worten steht die Antriebswelle des Retarders also neben dem ersten Schaltelement mit zumindest einem weiteren Schaltelement in Verbindung, wobei bei Betätigung dieses zumindest einen weiteren Schaltelements innerhalb des Kraftfahrzeugantriebsstranges je eine Koppelung der Antriebswelle des Rotors mit der Abtriebsseite einer Antriebsmaschine des Kraftfahrzeuges hergestellt werden kann.

Eine derartige Ausgestaltung einer Dauerbremseinrichtung hat dabei den Vorteil, dass der Retarder der Dauerbremseinrichtung somit innerhalb eines Kraftfahrzeugantriebsstranges einerseits mit der Abtriebsseite einer Antriebsmaschine, sowie andererseits mit der Abtriebsseite eines der Antriebsmaschine nachgeschalteten Kraftfahrzeuggetriebes gekoppelt werden kann. Insofern kann ein durch den Retarder erzeugbares Bremsmoment entweder antriebsseitig oder abtriebsseitig des Kraftfahrzeuggetriebes in den Kraftfahrzeugantriebsstrang eingespeist werden, wodurch der Retarder also zum einen als Primär- und zum anderen als Sekundärretarder betreibbar ist. Dementsprechend kann hinsichtlich den Betriebs des Retarders in Abhängigkeit eines Fahrzustands des jeweiligen Kraftfahrzeuges die aktuell für einen Bremsbetrieb geeignetere Variante gewählt werden.

Eine Einbindung als Primärretarder, d.h. die Einbindung des Retarders auf der Antriebsseite des Getriebes, hat den Vorteil, dass sich ein gangabhängiges Bremsmoment darstellen lässt, da das durch den Retarder erzeugte Bremsmoment durch einen jeweils geschalteten Gang des nachfolgenden Kraftfahrzeuggetriebes noch entsprechend übersetzt wird. Ein Primärretarder ist daher schon bei niedrigen Fahrgeschwindigkeiten effektiv. Hingegen ermöglicht eine Einbindung als Sekundärretarder, d.h. auf der Abtriebsseite des Getriebes, auch dann ein Abbremsen des Kraftfahrzeuges, wenn im Kraftfahrzeuggetriebe gerade aktuell ein Gangwechsel durchgeführt wird. Zudem belastet ein Sekundärretarder das Kraftfahrzeuggetriebe nicht zusätzlich.

Insofern kann durch einen Wechsel zwischen den beiden Einbindungsmöglichkeiten eine ideale Anpassung an Fahrzustände des Kraftfahrzeuges getroffen werden. Schließlich hat eine jeweilige Zuschaltbarkeit des Retarders über die Schaltelemente den Vorteil, dass Leerlaufverluste, welche ihre Ursache in einem Umpumpen von Luft und Resten von Flüssigkeit haben, vermieden werden können.

Im Unterschied dazu kann der Retarder bei der Dauerbremseinrichtung der DE 10 2011 120 729 A1 nur als Sekundärretarder eingebunden werden, so dass keine Anpassung eines Bremsbetriebes an unterschiedliche Fahrzustände, insbesondere Fahrgeschwindigkeiten, des Kraftfahrzeuges stattfinden kann.

Im Rahmen der Erfindung kann der Retarder mit seiner Antriebswelle jeweils entweder koaxial angeordnet sein oder auch achsversetzt liegen. Zudem erfolgt eine Einbindung bevorzugt jeweils über je eine zwischenliegende Hochtreiberstufe, wodurch noch eine geeignete Übersetzung eines Bremsmoments des Retarders realisiert werden kann. Eine Hochtreiberstufe kann dabei prinzipiell als Stirnrad- oder auch als Planetenstufe gestaltet sein.

Gemäß einer Ausführungsform der Erfindung ist die Antriebswelle des Retarders mit einer ersten Hälfte eines weiteren Schaltelements gekoppelt, dessen zweite Hälfte drehfest mit einem antriebsseitigen Teil eines Anfahrelements des Kraftfahrzeuggetriebes verbunden ist. Dabei dient dieser antriebsseitige Teil der Anbindung an die Abtriebsseite der Antriebsmaschine. Es ist also neben dem ersten Schaltelement ein weiteres Schaltelement vorgesehen, dessen eine Hälfte mit der Antriebswelle des Retarders gekoppelt ist, während die andere Hälfte mit einem mit der Abtriebsseite der Antriebsmaschine zu verbindenden Teil eines Anfahrelements des Kraftfahrzeuggetriebes verbunden ist. Eine Einbindung des weiteren Schaltelements an das Anfahrelement kann dabei unmittelbar am Anfahrelement oder weiter in das Kraftfahrzeuggetriebe hineinverlagert erfolgen.

In Weiterbildung der vorgenannten Ausführungsform sind sowohl das Anfahrelement als auch das weitere Schaltelement als Lastschaltelemente ausgeführt, die zu einer Kupplungseinheit zusammengefasst sind. Besonders bevorzugt sind die beiden Lastschaltelemente dabei zu einer Doppelkupplung zusammengefasst, wodurch eine kompakte antriebsseitige Anbindung des Kraftfahrzeuggetriebes, sowie eine primärseitige Einbindung des Retarders möglich sind. Eine Ausführung des Schaltelements als Lastschaltelement ermöglicht zudem ein Zuschalten des Retarders unter Last und damit dessen schnelles Ansprechen zu Beginn des Bremsbetriebes. Weiter bevorzugt sind die Lastschaltelemente jeweils über je ein Ausrückelement betätigbar, wobei die Ausrückelemente konzentrisch zueinander angeordnet sind.

Entsprechend einer alternativen Ausgestaltungsmöglichkeit der Erfindung ist das mindestens eine weitere Schaltelement mit je einer Hälfte auf je einer Getriebeeingangswelle des Kraftfahrzeuggetriebes platziert. Besonders bevorzugt sind dabei zwei weitere Schaltelemente vorgesehen, über welche die Antriebswelle des Retarders jeweils mit je einer zugehörigen Getriebeeingangswelle gekoppelt werden kann. Der Retarder ist also bei seiner Einbindung als Primärretarder direkt mit einer Getriebeeingangswelle des Kraftfahrzeuggetriebes gekoppelt, wobei im Falle der Ausführung des Kraftfahrzeuggetriebes als Doppelkupplungsgetriebe Anbindungsmöglichkeiten an beide Getriebeeingangswellen gegeben sind. Das mindestens eine weitere Schaltelement kann dabei als kraftschlüssiges oder auch als formschlüssiges Schaltelement ausgeführt sein, wobei bei Vorsehen von zwei weiteren Schaltelementen eine Zusammenfassung der beiden Schaltelemente zu einer Schalteinrichtung denkbar ist, da eine Einbindung jeweils nur über eines der Schaltelemente erfolgt. Hierbei kann diese Schalteinrichtung dann bevorzugt als Sperrsynchronisation realisiert sein.

Es ist eine weitere Ausführungsform der Erfindung, dass das erste Schaltelement als formschlüssiges Schaltelement ausgeführt ist. Eine Ausführung als formschlüssiges Schaltelement hat dabei den Vorteil, dass im geöffneten Zustand des Schaltelements nahezu keine Drehmomentübertragung stattfindet und damit eine ungewollte Übertragung eines Bremsmoments weitestgehend ausgeschlossen werden kann. Hingegen treten insbesondere bei kraftschlüssigen Schaltelementen, wie Lamellenkupplungen, auch im geöffneten Zustand gewisse Leerlaufmomente auf, welche den Gesamtwirkungsgrad entsprechend verschlechtern.

In einer Weiterbildung der vorgenannten Ausführungsform ist das mindestens eine weitere Schaltelement dann als kraftschlüssiges Schaltelement gestaltet, welches zum Synchronisieren des ersten, formschlüssigen Schaltelements in einem Schlupfbetrieb betrieben werden kann. In der Folge kann das erste Schaltelement als unsynchronisiertes Schaltelement ausgeführt werden, wie beispielsweise als unsynchronisierte Klauenkupplung, da vor einem Schließen dieses Schaltelements ein Fremdsynchronisieren über das weitere, kraftschlüssige Schaltelement vorgenommen werden kann.

Es ist eine weitere Ausgestaltungsmöglichkeit der Erfindung, dass der Retarder in das Kraftfahrzeuggetriebe integriert ist. Hierdurch kann der Retarder besonders kompakt angeordnet werden, zumal unter Umständen gewisse Gehäuseteile und Zuleitungen des Retarders mit durch das Getriebegehäuse gestaltet sein können. Alternativ dazu ist es jedoch auch denkbar, dass die Antriebswelle des Retarders, sowie die weiteren Komponenten der primär- und sekundärseitigen Anbindung innerhalb des Kraftfahrzeuggetriebes liegen, während der Retarder selbst außen auf das Getriebegehäuse aufgesetzt ist.

Die Erfindung ist nicht auf die angegebene Kombination der Merkmale des Hauptanspruchs oder der hiervon abhängigen Ansprüche beschränkt. Es ergeben sich darüber hinaus Möglichkeiten, einzelne Merkmale, auch soweit sie aus den Ansprüchen, der nachfolgenden Beschreibung bevorzugter Ausführungsformen der Erfindung oder unmittelbar aus den Zeichnungen hervorgehen, miteinander zu kombinieren. Die Bezugnahme der Ansprüche auf die Zeichnungen durch Verwendung von Bezugszeichen soll den Schutzumfang der Ansprüche nicht beschränken.

Vorteilhafte Ausgestaltungen der Erfindung, die nachfolgend erläutert werden, sind in den Zeichnungen dargestellt. Es zeigt:
- Fig. 1: eine schematische Ansicht eines Teils eines Kraftfahrzeugantriebsstranges, umfassend eine Dauerbremseinrichtung entsprechend einer ersten Ausführungsform der Erfindung; und
- Fig. 2: eine schematische Darstellung eines Teils eines Kraftfahrzeugantriebsstranges mit einer Dauerbremseinrichtung entsprechend einer zweiten Ausgestaltungsmöglichkeit der Erfindung.

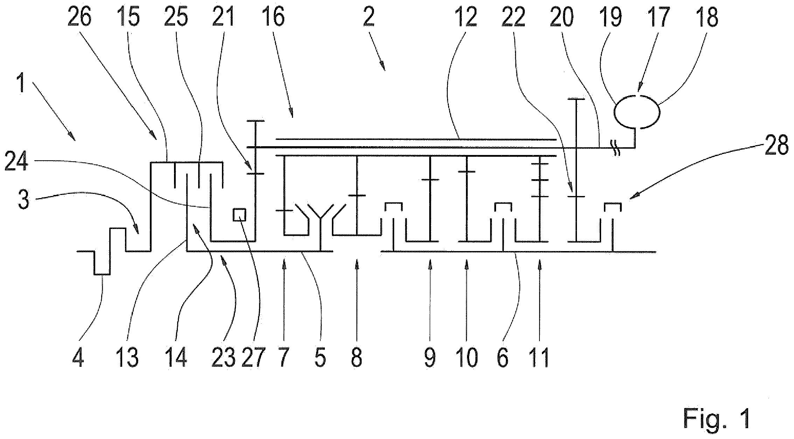

Aus Fig. 1 geht eine schematische Ansicht eines Antriebsstranges eines Kraftfahrzeuges hervor, bei welchem es sich bevorzugt um ein Nutzfahrzeug, wie beispielsweise einen Lastkraftwagen, handelt. Dabei umfasst dieser Kraftfahrzeugantriebsstrang eine Antriebsmaschine 1, welche vorliegend nur teilweise dargestellt und als Brennkraftmaschine ausgestaltet ist. Der Antriebsmaschine 1 ist im Kraftfahrzeugantriebsstrang dann ein Kraftfahrzeuggetriebe 2 nachgeschaltet, das antriebsseitig mit der Abtriebsseite 3 einer Kurbelwelle 4 der Antriebsmaschine 1 verbunden werden kann.

Im vorliegenden Fall ist das Kraftfahrzeuggetriebe 2 in Vorgelegebauweise ausgeführt und verfügt über eine Getriebeeingangswelle 5 und eine hierzu koaxial verlaufende Getriebeausgangswelle 6. Zwischen der Getriebeeingangswelle 5 und der Getriebeausgangswelle 6 kann eine Drehbewegung nun, abgesehen von einer direkten starren Koppelung der Getriebeeingangswelle 5 und der Getriebeausgangswelle 6, mit Hilfe mehrerer Stirnradstufen 7 bis 11 übersetzt werden, wobei der Kraftfluss dabei jeweils über eine achsparallel zur Getriebeeingangswelle 5 und der Getriebeausgangswelle 6 verlaufenden Vorgelegewelle 12 geführt wird.

Die Getriebeeingangswelle 5 steht zudem mit einem abtriebsseitigen Teil 13 eines Anfahrelements 14 in Verbindung, dessen antriebsseitiger Teil 15 drehfest mit der Abtriebsseite 3 der Antriebsmaschine 1 gekoppelt ist. Das Anfahrelement 14 ist dabei vorliegend als Lastschaltelement in Form einer nasslaufenden Trennkupplung gestaltet, welches bei Betätigung die Abtriebsseite 3 auch unter Last drehfest mit der Getriebeeingangswelle 5 verbindet.

Innerhalb des Antriebsstranges ist zudem eine Dauerbremseinrichtung 16 vorgesehen, welche einen Retarder 17 in Form eines hydrodynamischen Retarders aufweist. Der Retarder 17 setzt sich dementsprechend auf dem Fachmann prinzipiell bekannte Art und Weise aus einem Stator 18 und einem Rotor 19 zusammen, welche jeweils-vorliegend nicht weiter im Detail dargestellt - an einander zugewandten Seiten mit je einer Beschaufelung versehen sind und zwischen sich einen torusförmig gestalteten Arbeitsraum definieren. Ein Bremsmoment kann nun erzeugt werden, indem eine vom darzustellenden Bremsmoment abhängige Menge einer Flüssigkeit, beispielsweise in Form von Wasser oder Öl, in den Arbeitsraum eingebracht wird, welche dann bei sich drehendem Rotor über dessen Beschaufelung mitgenommen und in Richtung der Beschaufelung des Stators 18 beschleunigt wird. Dort stützt sich diese Flüssigkeit ab und wird wiederum zurück zu der Beschaufelung des Rotors 19 geleitet, wo sie verzögernd auf den Rotor 19 wirkt.

Eine Antriebswelle 20 des Retarders 17 verläuft koaxial zu der Vorgelegewelle 12 des Kraftfahrzeuggetriebes 2, indem die Antriebswelle 20 innerhalb der als Hohlwelle gestalteten Vorgelegewelle 12 verläuft. Als Besonderheit kann diese Antriebswelle 20 des Retarders 17 nun sowohl mit der Abtriebsseite 3 der Antriebsmaschine 1, als auch mit der Getriebeausgangswelle 6 des Kraftfahrzeuggetriebes 2 gekoppelt werden. Der Retarder 17 kann also hinsichtlich des Kraftfahrzeuggetriebes 2 als Primär- oder als Sekundärretarder betrieben werden. In beiden Fällen erfolgt eine Einbindung des Retarders 17 dabei über je eine zwischenliegende Hochtreiberstufe 21 bzw. 22, welche jeweils als Stirnradstufen gestaltet sind.

Die Einbindung des Retarders 17 als Primärretarder erfolgt dabei über ein Schaltelement 23, dessen abtriebsseitige Hälfte 24 mit dem antriebsseitigen Stirnrad der Hochtreiberstufe 21 verbunden ist, während eine antriebsseitige Hälfte 25 des Schaltelements 23 mit der Abtriebsseite 3 der Antriebsmaschine 1 gekoppelt ist. Das Schaltelement 23 ist im vorliegenden Fall zudem als Lastschaltelement gestaltet und mit dem ebenfalls als Lastschaltelement gestalteten Anfahrelement 14 zu einer Doppelkupplung 26 zusammengefasst. Eine Betätigung der beiden Lastschaltelemente erfolgt dabei jeweils über Ausrückelemente, die konzentrisch zueinanderliegend zu einer Ausrückeinheit 27 kombiniert sind.

Im Unterschied dazu erfolgt eine Einbindung des Retarders 17 als Sekundärretarder über ein Schaltelement 28, welches zwischen der Getriebeausgangswelle 6 und einem abtriebsseitigen Stirnrad der Hochtreiberstufe 22 platziert ist. Das Schaltelement 28 ist dabei als formschlüssiges, unsynchronisiertes Schaltelement in Form einer Klauenkupplung gestaltet, so dass für ein Schließen des Schaltelements 28 zunächst eine Drehzahlgleichheit zwischen der Getriebeausgangswelle 6 und dem abtriebsseitigen Stirnrad der Hochtreiberstufe 22 hergestellt werden muss. Dieses Fremdsynchronisieren wird vorliegend über das Schaltelement 23 vorgenommen, indem dieses in einem Schlupfbetrieb betrieben wird, bis sich die gewünschte Drehzahlgleichheit im Bereich des Schaltelements 28 einstellt.

Insbesondere im Falle der primärseitigen Einbindung des Retarders 17 kann ein schnelles Ansprechen des Retarders 17 erreicht werden, da hier über das Schaltelement 23 auch eine Einbindung unter Last möglich ist. Dabei kann ein Befüllen des Arbeitsraumes des Retarders 17 schon unmittelbar vor Beginn des Bremsbetriebes vorgenommen werden, um das Ansprechverhalten des Retarders 17 weiter zu verbessern.

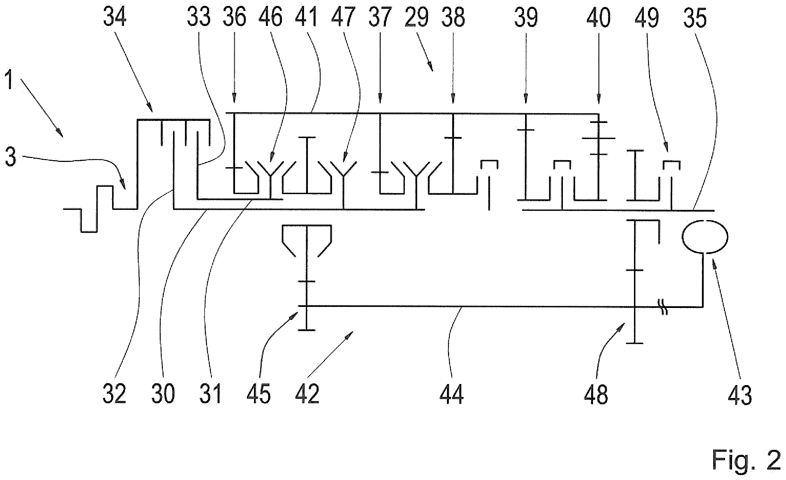

Des Weiteren geht aus Fig. 2 eine schematische Darstellung eines Teils eines Antriebsstranges eines Kraftfahrzeuges hervor, bei welchem im Unterschied zu der Variante nach Fig. 1 ein als Doppelkupplungsgetriebe gestaltetes Kraftfahrzeuggetriebe 29 zur Anwendung kommt. Dementsprechend verfügt dieses Kraftfahrzeuggetriebe 29 auf dem Fachmann bekannte Art und Weise über zwei koaxial zueinander verlaufende Getriebeeingangswellen 30 und 31, von welchen die Getriebeeingangswelle 31 als Hohlwelle zu der innenliegenden Getriebeeingangswelle 30 verläuft. Die Getriebeeingangswellen 30 und 31 können dabei im Einzelnen über je ein zugehöriges Anfahrelement 32 bzw. 33 mit der Abtriebsseite 3 der Antriebsmaschine 1 verbunden werden, wobei die Anfahrelemente 32 und 33 dabei zu einer Doppelkupplung 34 zusammengefasst sind. Eine Übersetzung einer jeweiligen Drehbewegung der Getriebeeingangswelle 30 bzw. der Getriebeeingangswelle 31 auf eine ebenfalls koaxial zu den beiden verlaufende Getriebeausgangswelle 35 erfolgt dann durch entsprechende Einbindung von Stirnradstufen 36 bis 40, wobei der Kraftfluss dabei über eine achsparallel verlaufende Vorgelegewelle 41 geführt wird.

Auch im Falle des Kraftfahrzeugantriebsstranges aus Fig. 2 ist wiederum eine Dauerbremseinrichtung 42 vorgesehen, welche entsprechend einer zweiten Ausgestaltungsmöglichkeit der Erfindung gestaltet ist. In Übereinstimmung mit der Dauerbremseinrichtung 16 aus Fig. 1 umfasst die Dauerbremseinrichtung 42 einen als hydrodynamischen Retarder gestalteten Retarder 43, welcher mit seiner Antriebswelle 44 zum einen als Primärretarder und zum anderen als Sekundärretarder eingebunden werden kann.

Wie aus Fig. 2 zu erkennen ist, erfolgt eine primärseitige Einbindung dabei mit Hilfe einer Hochtreiberstufe 45, deren antriebsseitiges Stirnrad über Schaltelemente 46 und 47 jeweils mit den Getriebeeingangswelle 30 und 31 drehfest verbunden werden kann. So nimmt das Schaltelement 46 bei Betätigung eine Koppelung des antriebsseitigen Stirnrades der Hochtreiberstufe 45 mit der Getriebeeingangswelle 31 vor, während das Schaltelement 47 für eine drehfeste Anbindung an der Getriebeeingangswelle 30 vorgesehen ist. Die Schaltelemente 46 und 47 sind dabei jeweils als formschlüssige Schaltelemente in Form von Sperrsynchronisationen gestaltet.

Für einen Betrieb des Retarders 43 als Sekundärretarder ist des Weiteren zwischen der Antriebswelle 44 und der Getriebeausgangswelle 35 eine weitere Hochtreiberstufe 48 vorgesehen, deren eines Stirnrad drehfest auf der Antriebswelle 44 vorgesehen ist, wohingegen das andere Stirnrad über ein Schaltelement 49 drehfest mit der Getriebeausgangswelle 35 gekoppelt werden kann. Das Schaltelement 49 ist dabei als unsynchronisiertes, formschlüssiges Schaltelement in Form einer Klauenkupplung gestaltet.

Mittels der erfindungsgemäßen Ausgestaltungen einer Dauerbremseinrichtung kann ein Betrieb eines jeweiligen Retarders optimal an jeweils vorherrschende Fahrzustände eines Kraftfahrzeuges angepasst werden.

### Bezugszeichen

- 1: Antriebsmaschine
- 2: Kraftfahrzeuggetriebe
- 3: Abtriebsseite
- 4: Kurbelwelle
- 5: Getriebeeingangswelle
- 6: Getriebeausgangswelle
- 7: Stirnradstufe
- 8: Stirnradstufe
- 9: Stirnradstufe
- 10: Stirnradstufe
- 11: Stirnradstufe
- 12: Vorgelegewelle
- 13: Teil
- 14: Anfahrelement
- 15: Teil
- 16: Dauerbremseinrichtung
- 17: Retarder
- 18: Stator
- 19: Rotor
- 20: Antriebswelle
- 21: Hochtreiberstufe
- 22: Hochtreiberstufe
- 23: Schaltelement
- 24: Hälfte
- 25: Hälfte
- 26: Doppelkupplung
- 27: Ausrückeinheit
- 28: Schaltelement
- 29: Kraftfahrzeuggetriebe
- 30: Getriebeeingangswelle
- 31: Getriebeeingangswelle
- 32: Anfahrelement
- 33: Anfahrelement
- 34: Doppelkupplung
- 35: Getriebeausgangswelle
- 36: Stirnradstufe
- 37: Stirnradstufe
- 38: Stirnradstufe
- 39: Stirnradstufe
- 40: Stirnradstufe
- 41: Vorgelegewelle
- 42: Dauerbremseinrichtung
- 43: Retarder
- 44: Antriebswelle
- 45: Hochtreiberstufe
- 46: Schaltelement
- 47: Schaltelement
- 48: Hochtreiberstufe
- 49: Schaltelement

## Patentansprüche

1. Dauerbremseinrichtung (16; 42) für einen Kraftfahrzeugantriebsstrang, umfassend einen Retarder (17; 43), dessen Antriebswelle (20; 44) mit einem ersten Schaltelement (28; 49) gekoppelt ist, wobei über dieses erste Schaltelement (28; 49) innerhalb des Kraftfahrzeugantriebsstranges eine Anbindung der Antriebswelle (20; 44) an eine Abtriebsseite eines Kraftfahrzeuggetriebes (2; 29) herstellbar ist, **dadurch gekennzeichnet, dass** die Antriebswelle (20; 44) des Retarders (17; 43) zudem mit mindestens einem weiteren Schaltelement (23; 46 ,47) gekoppelt ist, mittels welchem innerhalb des Kraftfahrzeugantriebsstranges jeweils eine Verbindung der Antriebswelle (20; 44) zu einer Abtriebsseite (3) einer dem Kraftfahrzeuggetriebe (2; 29) vorgeschalteten Antriebsmaschine (1) vollziehbar ist.

2. Dauerbremseinrichtung (16) nach Anspruch 1, **dadurch gekennzeichnet, dass** die Antriebswelle (20) des Retarders (17) mit einer ersten Hälfte (24) eines weiteren Schaltelements (23) gekoppelt ist, dessen zweite Hälfte (25) drehfest mit einem antriebsseitigen Teil (15) eines Anfahrelements (14) des Kraftfahrzeuggetriebes (2) verbunden ist, wobei dieser antriebsseitige Teil (15) der Anbindung an die Abtriebsseite (3) der Antriebsmaschine (1) dient.

3. Dauerbremseinrichtung (16) nach Anspruch 2, **dadurch gekennzeichnet, dass** sowohl das Anfahrelement (14) als auch das weitere Schaltelement (23) als Lastschaltelemente ausgeführt sind, die zu einer Kupplungseinheit zusammengefasst sind.

4. Dauerbremseinrichtung (16) nach Anspruch 3, **dadurch gekennzeichnet, dass** die Lastschaltelemente jeweils über je ein Ausrückelement betätigbar sind, wobei die Ausrückelemente konzentrisch zueinander angeordnet sind.

5. Dauerbremseinrichtung (42) nach Anspruch 1, **dadurch gekennzeichnet, dass** das mindestens eine weitere Schaltelement (46, 47) mit je einer Hälfte auf jeweils einer Getriebeeingangswelle (30, 31) des Kraftfahrzeuggetriebes (29) platziert ist.

6. Dauerbremseinrichtung (42) nach Anspruch 5, **dadurch gekennzeichnet, dass** zwei weitere Schaltelemente (46, 47) vorgesehen sind, über welche die Antriebswelle (44) des Retarders (43) jeweils mit je einer zugehörigen Getriebeeingangswelle (30, 31) koppelbar ist.

7. Dauerbremseinrichtung (16; 42) nach Anspruch 1, **dadurch gekennzeichnet, dass** das erste Schaltelement (28; 49) als formschlüssiges Schaltelement ausgeführt ist.

8. Dauerbremseinrichtung (16) nach Anspruch 7, **dadurch gekennzeichnet, dass** das mindestens eine weitere Schaltelement (23) als kraftschlüssiges Schaltelement gestaltet ist, welches zum Synchronisieren des ersten, formschlüssigen Schaltelements (28) in einem Schlupfbetrieb betreibbar ist.

9. Dauerbremseinrichtung nach Anspruch 1, **dadurch gekennzeichnet, dass** der Retarder in das Kraftfahrzeuggetriebe integriert ist.

10. Kraftfahrzeugantriebsstrang, umfassend eine Dauerbremseinrichtung (16; 42) nach einem oder mehreren der Ansprüche 1 bis 9.

## Claims

1. Retarder brake device (16; 42) for a motor vehicle drive train, comprising a retarder (17; 43), the drive shaft (20; 44) of which is coupled to a first shifting element (28; 49), it being possible for an attachment of the drive shaft (20; 44) to an output side of a motor vehicle transmission (2; 29) to be established within the motor vehicle drive train via the said first shifting element (28; 49), **characterized in that** the drive shaft (20; 44) of the retarder (17; 43) is additionally coupled to at least one further shifting element (23; 46, 47), by means of which in each case one connection of the drive shaft (20; 44) to an output side (3) of a drive machine (1) which is connected upstream of the motor vehicle transmission (2; 29) can be performed within the motor vehicle drive train.

2. Retarder brake device (16) according to Claim 1, **characterized in that** the drive shaft (20) of the retarder (17) is coupled to a first half (24) of a further shifting element (23), the second half (25) of which is connected fixedly to a drive-side part (15) of a starting element (14) of the motor vehicle transmission (2) so as to rotate with it, the said drive-side part (15) serving for attaching to the output side (3) of the drive machine (1).

3. Retarder brake device (16) according to Claim 2, **characterized in that** both the starting element (14) and the further shifting element (23) are configured as power-shift elements which are combined to form a coupling unit.

4. Retarder brake device (16) according to Claim 3, **characterized in that** the power-shift elements can be actuated in each case via one disengaging element, the disengaging elements being arranged concentrically with respect to one another.

5. Retarder brake device (42) according to Claim 1, **characterized in that** the at least one further shifting element (46, 47) is positioned with in each case one half on in each case one transmission input shaft (30, 31) of the motor vehicle transmission (29).

6. Retarder brake device (42) according to Claim 5, **characterized in that** two further shifting elements (46, 47) are provided, via which the drive shaft (44) of the retarder (43) can be coupled in each case to one associated transmission input shaft (30, 31).

7. Retarder brake device (16; 42) according to Claim 1, **characterized in that** the first shifting element (28; 49) is configured as a positively locking shifting element.

8. Retarder brake device (16) according to Claim 7, **characterized in that** the at least one further shifting element (23) is designed as a non-positive shifting element which can be operated in a slipping mode in order to synchronize the first, positively locking shifting element (28).

9. Retarder brake device according to Claim 1, **characterized in that** the retarder is integrated into the motor vehicle transmission.

10. Motor vehicle drive train, comprising a retarder brake device (16; 42) according to one or more of Claims 1 to 9.

## Revendications

1. Dispositif de frein permanent (16 ; 42) pour une chaîne cinématique d'un véhicule automobile, comprenant un ralentisseur (17 ; 43) dont l'arbre d'entraînement (20 ; 44) est accouplé à un premier élément de commutation (28 ; 49), une liaison de l'arbre d'entraînement (20 ; 44) à un côté de prise de force d'une transmission de véhicule automobile (2 ; 29) pouvant être établie par le biais de ce premier élément de commutation (28 ; 49) à l'intérieur de la chaîne cinématique du véhicule automobile, **caractérisé en ce que** l'arbre d'entraînement (20 ; 44) du ralentisseur (17 ; 43) est en outre accouplé à au moins un élément de commutation supplémentaire (23 ; 46, 47) au moyen duquel à chaque fois une connexion de l'arbre d'entraînement (20 ; 44) à un côté de prise de force (3) d'une machine motrice (1) montée en amont de la boîte transmission du véhicule automobile (2 ; 29) peut être réalisée à l'intérieur de la chaîne cinématique du véhicule automobile.

2. Dispositif de frein permanent (16) selon la revendication 1, **caractérisé en ce que** l'arbre d'entraînement (20) du ralentisseur (17) est accouplé à une première moitié (24) d'un élément de commutation supplémentaire (23), dont la deuxième moitié (25) est connectée de manière solidaire en rotation à une partie (15) du côté de l'entraînement d'un élément de démarrage (14) de la transmission de véhicule automobile (2), cette partie (15) du côté de l'entraînement servant à la liaison au côté de prise de force (3) de la machine motrice (1).

3. Dispositif de frein permanent (16) selon la revendication 2, **caractérisé en ce que** l'élément de démarrage (14) ainsi que l'élément de commutation supplémentaire (23) sont réalisés sous forme d'éléments de commutation de charge, qui sont réunis pour former une unité d'accouplement.

4. Dispositif de frein permanent (16) selon la revendication 3, **caractérisé en ce que** les éléments de commutation de charge peuvent être actionnés chacun par le biais d'un élément de débrayage respectif, les éléments de débrayage étant disposés de manière concentrique l'un par rapport à l'autre.

5. Dispositif de frein permanent (42) selon la revendication 1, **caractérisé en ce que** l'au moins un élément de commutation supplémentaire (46, 47) est placé avec une moitié respective sur un arbre d'entrée de transmission (30, 31) respectif de la transmission de véhicule automobile (29).

6. Dispositif de frein permanent (42) selon la revendication 5, **caractérisé en ce que** deux éléments de commutation supplémentaires (46, 47) sont prévus, par le biais desquels l'arbre d'entraînement (44) du ralentisseur (43) peut à chaque fois être accouplé à un arbre d'entrée de transmission associé respectif (30, 31).

7. Dispositif de frein permanent (16 ; 42) selon la revendication 1, **caractérisé en ce que** le premier élément de commutation (28 ; 49) est réalisé sous forme d'élément de commutation par engagement par correspondance de formes.

8. Dispositif de frein permanent (16) selon la revendication 7, **caractérisé en ce que** l'au moins un élément de commutation supplémentaire (23) est configuré sous forme d'élément de commutation par engagement par force, qui peut être mis en fonctionnement en mode de glissement pour la synchronisation du premier élément de commutation par engagement par correspondance de formes (28).

9. Dispositif de frein permanent selon la revendication 1, **caractérisé en ce que** le ralentisseur est intégré dans la transmission du véhicule automobile.

10. Chaîne cinématique de véhicule automobile, comprenant un dispositif de frein permanent (16 ; 42) selon l'une quelconque ou plusieurs des revendications 1 à 9.
